# EUROPÄISCHE PATENTSCHRIFT

(11) **EP 4 286 095 B1**
(45) Veröffentlichungstag und Bekanntmachung des Hinweises auf die Patenterteilung: **05.06.2024**
(21) Anmeldenummer: 22176407.9
(22) Anmeldetag: 31.05.2022
(51) Int. Cl.: B24B 13/00, B24B 27/00, B23Q 7/10, B23Q 7/16, B23Q 7/02, B23Q 7/00, B24B 9/14, B29D 11/00

(54) **BEARBEITUNGSMASCHINE FÜR OPTISCHE LINSEN UND FERTIGUNGSANLAGE HIERMIT**
OPTICAL LENS PROCESSING MACHINE AND MANUFACTURING PLANT USING THE SAME
MACHINE D'USINAGE POUR LENTILLES OPTIQUE ET INSTALLATION DE PRODUCTION ASSOCIÉE

(43) Veröffentlichungstag der Anmeldung: 06.12.2023
(73) Patentinhaber: OptoTech AG, 4528 Zuchwil (CH)
(72) Erfinder: HARNICKELL, Volker, 4500 Solothurn (CH); BRACHER, Ernst, 4512 Langendorf (CH)
(74) Vertreter: Patentanwälte Olbricht Buchhold Keulertz

(56) Entgegenhaltungen:
- EP-A1- 1 473 114
- DE-A1-102018 007 463
- DE-A1-102018 007 494
- JP-A- H02 269 539

## Beschreibung

Die Erfindung betrifft eine Bearbeitungsmaschine für die Bearbeitung optischer Linsen und/oder optischer Rohlinsen gemäß Anspruch 1 und eine Fertigungsanlage mit wenigstens zwei solcher Bearbeitungsmaschinen gemäß Anspruch 14.

Aus dem Stand der Technik ist eine Vielzahl unterschiedlicher Bearbeitungsmaschinen zur Bearbeitung von optischen Linsen und/oder optischer Rohlinsen bekannt, bspw. zur Herstellung von Brillengläsern. In DE 10 2019 127 628 A1 ist beispielsweise eine Drehmaschine beschrieben. In DE 10 2015 102 900 A1 ist eine Simultandrehmaschinen zum simultanen Drehen von zwei Linsenrohlingen offenbart. Behälter (Job-Trays) mit je zwei Linsenrohlingen werden entlang eines Förderbandes transportiert. Hieraus entnimmt eine Werkstückhandhabungsvorrichtung das Paar Linsen und legt im gleichen Hubzyklus zwei bearbeitete Linsen wieder im Behälter ab. Die herausgenommenen Rohlinsen werden dann an Werkstückhalter der Drehstationen übergeben und bearbeitet. Ähnlich aufgebaut ist eine in DE 10 2015 102 899 A1 angegebene Simultanfräsvorrichtung. Für die feinere Bearbeitung sind beispielsweise eine Schleifmaschine aus DE 198 09 353 A1, ein Polierwerkzeug aus DE 10 2013 108 766 A1 und eine Poliervorrichtung aus DE 10 2007 050 470 A1 bekannt. Um Linsen in den Bearbeitungsmaschinen fixieren zu können, ist außerdem bekannt, die Linsen mittels einem Klebstoff, insbesondere einem Alloy auf Blockstücken festzukleben. Dies ist beispielsweise in DE 10 2008 064 333 A1 beschrieben. Alternativ dazu existieren mechanisch und auf Unterdruck basierende Werkstückhalter für Linsen wie beispielsweise in DE 10 2007 040 395 B4 und DE 10 2004 016 445 B4 angegeben. Aus EP 3181 291 B1 ist weiterhin bekannt, die zu bearbeitenden Linsen mit Schutzfolien zu versehen, welche mit der dort beschriebenen Vorrichtung automatisiert wieder von der Linse entfernt werden können. Fernerhin ist aus EP 3 819 092 A1 vorbekannt, Rohlinsen automatisiert aus Umverpackungen zu entnehmen, um die Linsen im Anschluss in Behältern den nachgelagerten Produktionsmaschinen zuzuführen. Zusätzlich existieren Umfangsbearbeitungsmaschinen, Deblocker-Maschinen zum Trennen der Linsen von Blockstücken (siehe bspw.

EP 2 042 265 B1), Beschichtungsvorrichtungen, Reinigungsmaschinen und vieles mehr, um aus einer Rohlinse letztlich ein Brillenglas zu fertigen. All diese unterschiedlichen Arbeitsschritte werden mit einzelnen Bearbeitungsmaschinen ausgeführt. Lediglich eng zusammenhängende Prozesse wie Drehen und Fräsen oder Schleifen und Polieren werden teilweise in einer Bearbeitungsmaschine miteinander vereint.

Um die unterschiedlichen Arbeitsschritte durchzuführen, müssen die Linsen bzw. Rohlinsen zu den unterschiedlichen Arbeitsstationen transportiert werden. Dazu ist zunächst der Behälter für die Linsenpaare vorbekannt, bspw. aus der genannten DE 10 2015 102 899 A1,
DE 10 2015 102 900 A1 und EP 2042 265 B1.

Im einfachsten Fall trägt ein Mitarbeiter die Behälter mit den Linsenpaaren von Maschine zu Maschine. Aus dem allgemeinen Fertigungskonzepten sind Werkstattkonzepte mit Bearbeitungsinseln und die Fertigungsstraßenkonzepte vorbekannt, um den Personalaufwand zu senken. Die zuletzt genannten Fertigungsstraßen werden bereits in der Brillenglasfertigung zumindest teilweise eingesetzt, wozu die einzelnen Maschinen mit zusätzlichen Förderstrecken, insbesondere Förderbändern miteinander verbunden werden. So lassen sich Paare aus optischen Linsen bzw. optischen Rohlinsen in einem Behälter automatisiert von Bearbeitungsmaschine zu Bearbeitungsmaschine transportiert. Problematisch sind die unterschiedlichen Durchlaufzeiten der kombinierten Bearbeitungsmaschinen, weswegen man eine zentrale Hauptförderstrecke ohne Bearbeitungsmaschinen nutzt, und jede Bearbeitungsmaschine in eine von der Hauptförderstrecke horizontal abzweigende Förderschleife aus Förderbändern setzt. Damit kann jede Bearbeitungsmaschine Behälter mit zu bearbeitenden Linsen von der Hauptförderstrecke entnehmen und dann im maschinenspezifischen Arbeitstempo auf der Förderschleife transportieren. Die Entnahme der optischen Linsen bzw. Rohlinsen erfolgt dann unter anderem mit Werkstückhandhabungsvorrichtungen, wie beispielsweise in DE 10 2015 102 899 A1 beschrieben, aus dem Behälter, der auf dem Förderband der Maschine steht. Das Förderband der Maschine bildet dabei einen Teilabschnitt der Förderschleife aus. Aus EP1 473 114 A1 ist weiterhin eine Bearbeitungsmaschine für die Bearbeitung optischer Linsen bekannt, und bildet die Basis für den Oberbegriff von Anspruch 1.

Nachteilhaft ist der erhebliche konstruktive Aufwand, um die einzelnen Bearbeitungsmaschinen über zusätzliche Fördermittel miteinander zu verknüpfen. Durch die seitlich abzweigenden Förderschleifen resultiert ein tannenbaumartiges Layout der Fertigungsmaschinen, das sehr breit und lang ist, was zu weiten Wegen für das Bedienpersonal und das Servicepersonal führt. Vor allem zwischen zwei benachbarten Förderschleifen ist Platz für die Bedienung und den Service zu belassen, wodurch auch die Hauptförderstrecke eine große Länge aufweist. Auch stellt die gesamte Vernetzung der einzelnen Maschinen eine Herausforderung dar, denn die Zugängigkeit zu den Bearbeitungsmaschinen und Fördereinrichtungen ist dem Arbeitsschutz genügend auszuführen. Dazu sind vor allem Kabel und Fluidleitungen so zu verlegen, dass sie keine Behinderung darstellen, und Mindestbreiten für die Durchgänge einzuhalten. Die Installation der Fertigungsanlage mit solchen Bearbeitungsmaschinen ist aufwendig, es bedarf zahlreicher Individualanfertigungen, der Betrieb ist personalintensiv und es wird eine große Stellfläche benötigt.

Die Aufgabe der Erfindung ist es daher, die Nachteile des Standes der Technik zu überwinden und eine Lösung bereitzustellen, mit der sich eine Fertigungsanlage bereitstellen lässt, die eine kleine Stellfläche aufweist, einfach und kostengünstig installiert werden kann, im Betrieb gut für das Bedien- und Servicepersonal zugängig ist, und dennoch die unterschiedlichen Durchlaufzeiten der Bearbeitungsmaschinen zumindest teilweise ausgleichen kann.

Hauptmerkmale der Erfindung sind in Anspruch 1 und in Anspruch 14 angegeben.

Ausgestaltungen sind Gegenstand der Ansprüche 2 bis 13, 15 und der Beschreibung.

Die Erfindung betrifft eine Bearbeitungsmaschine für die Bearbeitung optischer Linsen und/oder optischer Rohlinsen, die von einer Baueinheit ausgebildet ist. Sie weist eine horizontal ausgerichtete Förderstrecke für den Transport von Behältern enthaltend wenigstens eine, vorzugsweise wenigstens zwei, und besonders bevorzugt exakt zwei optische Linsen und/oder optische Rohlinsen auf, wobei sich die Förderstrecke von einer Eintrittsseite der Baueinheit zu einer gegenüberliegenden Austrittsseite der Baueinheit erstreckt. Erfindungsgemäß weist die Bearbeitungsmaschine einen Behälterpufferspeicher und eine Behältertransportvorrichtung auf. Die Behältertransportvorrichtung ist dazu ausgestaltet, Behälter von der Förderstrecke zu entnehmen und im Behälterpufferspeicher einzulagern, sowie dazu ausgestaltet, Behälter zurück auf die Förderstrecke zu transportieren. Des Weiteren weist die Bearbeitungsmaschine eine Werkstückhandhabestation mit wenigstens einem, vorzugsweise wenigstens zwei, weiter bevorzugt drei, und besonders bevorzugt vier Stellplätzen für je einen Behälter auf. Die Behältertransportvorrichtung ist weiterhin dazu ausgestaltet, Behälter von dem Behälterpufferspeicher (optional auch direkt von der Förderstrecke) zu dem oder wenigstens einem der Stellplätze zu transportieren. Die Werkstückhandhabestation wiederum weist eine Handhabungsvorrichtung auf, die dazu ausgestaltet ist, die optischen Linsen und/oder optischen Rohlinsen aus einem Behälter, der auf dem oder einem der Stellplätze steht, zu entnehmen und an eine Bearbeitungsstation (insbesondere der Bearbeitungsmaschine) zu übergeben.

Erfindungsgemäß ist so erreicht, dass innerhalb der Baueinheit der Bearbeitungsmaschine eine Pufferung der Behälter erfolgen kann. Der Behälterpufferspeicher ist dazu separat zur Förderstrecke ausgebildet, wodurch die Förderstrecke kurz ausfallen kann. Damit lassen sich mehrere solcher Bearbeitungsmaschinen in Reihe hintereinander anordnen. Eine Förderschleife mit maschinenspezifischer Fördergeschwindigkeit und Behälterpufferung auf der Förderschleife ist nicht erforderlich. Das vereinfacht das Layout einer Fertigungsanlage mit solchen Bearbeitungsmaschinen. Entsprechend schnell und kostengünstig ist die Inbetriebnahme solcher Fertigungsanlagen, denn es sind keine oder nur wenige Spezialanfertigungen zwischen den Bearbeitungsmaschinen zu planen. Zudem kann bei solch einem Layout für gerade und kurze Wege für das Bedien- und Servicepersonal gesorgt werden, bspw. Bedienen auf einer Seite der Bearbeitungsmaschinenreihe und Service auf der gegenüberliegenden Seite. Außerdem lässt sich mit den Bearbeitungsmaschinen selektiv agieren, nämlich nicht zu bearbeitende optische Linsen und/oder optische Rohlinsen können einfach ohne Entnahme mit dem Behälter zur Austrittsseite gefördert werden. Das übernimmt die Funktion der im Stand der Technik genutzten Abzweigungen von der Hauptförderstrecke auf die Förderschleifen. Die Bearbeitungsstation wird über die Werkstückhandhabestation mit Werkstücken versorgt, die wiederum aus den gepufferten Behältern im Behälterpufferspeicher oder direkt von der Förderstrecke mit Behältern versorgt wird. Soweit die Behältertransportvorrichtung dazu ausgestaltet ist, Behälter optional direkt von der Förderstrecke auf einen der Stellplätze zu transportieren, können priorisierte Behälter die gepufferten Behälter auch leicht überholen. Das erlaubt eine Auftragspriorisierung: sei es zur Erfüllung von Kundenwünschen oder der Auslastungsoptimierung der anderen Bearbeitungsmaschinen entlang der Fertigungsanlage. Der oder die Stellplätze sollten nicht zum Behälterpufferspeicher gehören. Entsprechend sollte die Werkstückhandhabestation keine optischen Linsen und/oder optischen Rohlinsen aus Behältern entnehmen können, die sich im Behälterpufferspeicher befinden. Der Behälterpufferspeicher kann so Behälter ohne Rücksicht auf die Zugängigkeit zum Inhalt (den Linsen) eng auf kleinem Raum speichern, bspw. übereinander anordnen.

Gemäß einer Variante der Bearbeitungsmaschine weist die Bearbeitungsstation eine Bearbeitungsvorrichtung aus einer
a) ersten Gruppe umfassend Vorbereitungsvorrichtungen, nämlich
   o Entpackungsvorrichtungen zur Entnahme der optischen Linsen und/oder optischen Rohlinsen aus einer Verpackung;
   o Reinigungsvorrichtungen zur Reinigung der optischen Linsen und/oder optischen Rohlinsen;
   o Aufblockvorrichtungen zur Verbindung der optischen Linsen und/oder optischen Rohlinsen mit einem Blockstück;
   o Folierungsvorrichtungen zur Beklebung von Flächen der optischen Linsen und/oder optischen Rohlinsen mit Schutzfolie; und
   o Kennzeichnungsvorrichtungen zum Aufbringen von Informationen auf die optischen Linsen und/oder optischen Rohlinsen;
   und/oder
b) zweiten Gruppe umfassend mechanische Bearbeitungsmaschinen, nämlich
   o Fräsmaschinen zur fräsenden Bearbeitung der optischen Linsen und/oder optischen Rohlinsen;
   o Drehmaschinen zur drehenden Bearbeitung der optischen Linsen und/oder optischen Rohlinsen;
   o Schleifmaschinen zum Schleifen der optischen Linsen und/oder optischen Rohlinsen;
   o Poliermaschinen zum Polieren der optischen Linsen und/oder optischen Rohlinsen; und
   o Umfangsbearbeitungsmaschinen zur Herstellung einer Umfangskontur der optischen Linsen und/oder optischen Rohlinsen;
   und/oder
c) dritten Gruppe umfassend Oberflächenbehandlungsmaschinen, nämlich
   o Beschichtungsvorrichtungen zur Beschichtung von Flächen der optischen Linsen und/oder optischen Rohlinsen; und
   o Temperierungsvorrichtungen zur thermischen Behandlung der optischen Linsen und/oder optischen Rohlinsen;
   und/oder
d) vierten Gruppe umfassend Nachbereitungsmaschinen, nämlich
   o Messvorrichtungen zur Bestimmung von Parametern der optischen Linsen und/oder optischen Rohlinsen;
   o Folienentfernungsvorrichtungen zum Entfernen von Schutzfolien von den optischen Linsen und/oder optischen Rohlinsen;
   o Abblockvorrichtungen zum Trennen der optischen Linsen und/oder optischen Rohlinsen von einem Blockstück;
   o Reinigungsvorrichtungen zum Entfernen von Bearbeitungsrückständen von den optischen Linsen und/oder optischen Rohlinsen; und
   o Verpackungsvorrichtungen zum Verpacken der optischen Linsen und/oder optischen Rohlinsen in einer Verpackung;
   auf. All diese Bearbeitungsvorrichtungen können einen Arbeitsschritt bei der Bearbeitung einer optischen Linse bzw. optischen Rohlinse erfüllen. Völlig unabhängig von der Art der Linsenbearbeitung sind diese Bearbeitungsvorrichtungen vorteilhaft mit der Förderstrecke, dem Behälterpufferspeicher, der Behälterhandhabungsvorrichtung und der Werkstückhandhabungsvorrichtung kombiniert und bilden damit eine vorteilhafte Baueinheit aus. Baueinheiten mit gleichen und/oder unterschiedlichen Bearbeitungsvorrichtungen müssen nur noch hintereinander gereiht werden. Ist die Baueinheit mit Fräsvorrichtung beispielsweise doppelt so schnell wie eine Baueinheit mit Drehvorrichtung kann einfach ein Paar Baueinheiten mit Drehvorrichtungen hintereinander gesetzt werden, um die Kapazitäten aufeinander abzustimmen. Zur Kapazitätssteigerung kann beispielsweise einfach eine weitere Baueinheit des schwächsten Fertigungsglieds zusätzlich eingereiht werden. Möchte man die Kapazität senken, kann man bei einer Mehrzahl an Baueinheiten des schwächsten Fertigungsglieds einfach eine dieser Baueinheiten entfernen.

Vorzugsweise weist die Bearbeitungsvorrichtung eine Werkstückaufnahme auf, beispielsweise ein Spannfutter, einen Unterdruckhalter oder einen Greifer. Mit dieser lässt sich die optische Linse und/oder die optische Rohlinse bei der Bearbeitung fixieren. Für einige Prozesse wie das Reinigen und Beschichten können als Werkstückaufnahme reine Ablagen ohne zusätzliche Linsenfixierung hinreichend sein.

Gemäß einer optionalen Ausgestaltung erstreckt sich die Förderstrecke derart von der Eintrittsseite der Baueinheit zu der gegenüberliegenden Austrittseite der Baueinheit, dass eine bezüglich der Förderstrecke baugleich ausgeführte zweite Bearbeitungsmaschine so neben die Bearbeitungsmaschine stellbar ist, dass die Eintrittsseite der zweiten Bearbeitungsmaschine an die Austrittsseite der Bearbeitungsmaschine angrenzt, insbesondere unmittelbar, und die Förderstrecke der zweiten Bearbeitungsmaschine die Förderstrecke der Bearbeitungsmaschine fortsetzt, insbesondere unmittelbar. Es wird entsprechend keine zusätzliche Fördertechnik zwischen den Bearbeitungsmaschinen gebraucht.

Gemäß einer möglichen Ausführungsform der Bearbeitungsmaschine sind die Eintrittsseite und die Austrittsseite parallel zueinander und quer, vorzugsweise senkrecht, zu der Förderstrecke ausgerichtet. Hierdurch können die Bearbeitungsmaschinen linear hintereinander gereiht werden. Vorzugsweise ist dies auch ohne Versatz möglich, wozu die Eintrittsseite und Austrittsseite der Förderstrecke die gleiche Position im Querschnitt der Bearbeitungsmaschine aufweisen sollten.

In einer speziellen Ausführungsform weist die Förderstrecke ein Förderband oder eine Rollenbahn auf. Dies ist konstruktiv einfach umsetzbar. Bei einem Förderband wird üblicherweise eine Mehrzahl an Rollen mit einem Transportband umspannt. Eine Rollenbahn nutzt einzelne Rollen als Transportstrecke. Mit solchen lässt sich jeder Behälter einzeln und mit individueller Geschwindigkeit voran bewegen, zumindest, wenn Rollbahnabschnitte oder die einzelnen Rollen separat voneinander angetrieben sind.

Bei einer besonderen Ausgestaltung der Bearbeitungsmaschine ist die Förderstrecke linear ausgebildet ist, insbesondere über die gesamte Länge. Dies ist konstruktiv einfach, preiswert und ermöglicht eine lineare Förderstrecke entlang der Fertigungsanlage, was zudem prozesssichere Transporte der Behälter ohne das Risiko eines Hängenbleibens erlaubt.

Eine Besonderheit kann darin bestehen, dass die Bearbeitungsmaschine ein Lesegerät zum Auslesen von Informationen von Behältern und/oder optischen Linsen und/oder optischen Rohlinsen, die auf der Förderstrecke angeordnet sind, aufweist, und die Behältertransportvorrichtung mit einer Entnahmelogik angesteuert ist, welche darüber entscheidet, ob ein Behälter von der Förderstrecke entnommen wird oder der Behälter ohne Entnahme zur Austrittsseite gefördert wird. Damit kann man dafür sorgen, dass nur die Behälter mit zu bearbeitenden Linsen entnommen werden. Dazu sollte eine Datenverbindung zwischen dem Lesegerät und der Entnahmelogik, bspw. ein Prozessor mit einer Entscheidungssoftware, bestehen. Zur Optimierung einer Fertigungsanlage mit mehreren Bearbeitungsmaschinen könnte man zusätzlich einzelne Behälter mit nicht zu bearbeitenden Linsen temporär im Behälterpufferspeicher einlagern, wenn beispielsweise der Behälterpufferspeicher einer nachgelagerten Bearbeitungsmaschine voll ist.

In einer Ausführungsvariante weist die Baueinheit ein Gehäuse auf, das eine gerade erste Gehäusewandung auf der Eintrittsseite aufweist, und das eine zur ersten Gehäusewandung parallele zweite Gehäusewandung auf der Austrittsseite aufweist. Durch die geraden Gehäusewandungen lassen sich die Baueinheiten eng aneinander positionieren und eine Baueinheit kann beispielsweise einfach aus der Reihe gezogen werden, weil keine Verschachtelung besteht. Gerade soll weit verstanden werden, denn etwaige Versteifungssicken und Vertiefungen für beispielsweise Anschlüsse und dergleichen sind für den Fachmann verständlich unschädlich, maßgeblich ist eher ein gerader Maschinenabschluss, um die Bearbeitungsmaschinen möglichst ohne Lücke aneinander stellen zu können.

Im Speziellen kann vorgesehen sein, dass die Förderstrecke nicht über die erste und zweite Gehäusewandung hinausführt. Damit wird die gesamte Länge der Förderstrecke für das Handling und die Bearbeitung der Linsen ausgenutzt. Entsprechend kurz kann eine Fertigungsanlage ausgestaltet werden, denn es sind keine reinen Förderwege entlang der Fertigungsanlage notwendig, bspw. auch nicht um auf diesen Zusatzförderstrecken eine Pufferung mit Behältern bereitzustellen.

Bei einer besonderen Variante ist die Behältertransportvorrichtung dazu ausgestaltet, Behälter (ausschließlich) von einem (ersten) Abschnitt der Förderstrecke zu entnehmen, nicht jedoch von einem anderen (zweiten) Abschnitt der Förderstrecke (Die Nummerierung in ersten und zweiten Abschnitt bezieht sich nicht auf die Förderrichtung der Förderstrecke, sondern ausschließlich auf eine Unterteilung in mehrere Abschnitte.) Damit wird eine kompakte Behältertransportvorrichtung erzielt, denn deren Aktionsradius entlang der Förderstrecke ist begrenzt. Der zweite Abschnitt kann als horizontaler Pufferspeicher genutzt werden, so zum Beispiel um das Entnehmen und Aufsetzen von Behältern im ersten Abschnitt nicht durch nachrückende Behälter zu behindern. Bevorzugt liegt der zweite Abschnitt in Förderrichtung vor dem ersten Abschnitt. Hierdurch können die nachrückenden Behälter vor dem ersten Abschnitt gestoppt werden. Der zweite Abschnitt kann freiliegend außerhalb des Gehäuses verlaufen, vorzugsweise auf der Oberseite des Gehäuses. Damit kann der Transport auf der Förderstrecke visuell von außen beobachtet werden. Fehler werden schnell entdeckt und lassen sich ohne Öffnen des Gehäuses zumindest auf dem zweiten Abschnitt beheben. Auch für die Qualitätskontrolle kann es Sinn machen, einzelne Behälter ohne Aufwand händisch entnehmen und wieder aufsetzen zu können. Der erste Abschnitt kann innerhalb des Gehäuses angeordnet sein. Das Gehäuse bildet in diesem Fall eine Arbeitsschutzhülle aus, um nicht in die sich bewegenden Teile der Behältertransportvorrichtung greifen zu können. Soweit nur geringe Stellkräfte und -geschwindigkeiten bei der Entnahme der Behälter von der Förderstrecke auftreten, können Arbeitsschutzmaßnahmen ggf. entfallen. Dann kann auch der erste Abschnitt freiliegend außerhalb des Gehäuses verlaufen.

Im Weiteren kann das Gehäuse eine Vorderseite und eine Rückseite aufweisen, wobei die Förderstrecke zwischen der Vorderseite und der Rückseite von der Eintrittsseite zur Austrittsseite verläuft. Optional ist auf der Vorderseite wenigstens ein Bedienelement angeordnet. Weiter optional kann auf der Rückseite des Gehäuses wenigstens eine Serviceklappe ausgebildet sein. Damit lässt sich die Bedienung auf die Vorderseite der Bearbeitungsmaschine oder einer ganzen Reihe von Bearbeitungsmaschinen fokussieren, wohingegen der Service primär von der Rückseite erfolgt.

Die Behälter werden durch den Fachmann auch als Tray oder Job-Tray bezeichnet. Sie bestehen vorzugsweise aus Kunststoff. Außerdem sollten die Behälter eine offene Oberseite aufweisen. Dies trägt zu einer leichten, robusten, und für härtere Komponenten der Bearbeitungsmaschine unkritischen Konstruktion bei und erlaubt einen leichten Zugang zu den Linsen bzw. Rohlinsen.

Die optischen Linsen und optische Rohlinsen können aus optisch durchlässigem Glas oder Kunststoff bestehen. Die optischen Linsen und optischen Rohlinsen sollten gegenüberliegende Flächen aufweisen, die entweder bereits optisch wirksam sind oder zu optisch wirksamen Flächen bearbeitet werden. Die optisch wirksamen Flächen können konkav und/oder konvex ausgebildet sein. Dabei haben die optischen Linsen und optischen Rohlinsen vorzugsweise einen runden Umfang, wobei der Umfang bei der Brillenglasfertigung jedoch früher oder später im Fertigungsprozess auch oval oder an die Öffnung eines Brillengestells angepasst sein kann.

Gemäß einer näheren Ausgestaltung weist der Behälterpufferspeicher übereinander angeordnete Speicherplätze für die Behälter auf. Damit wird eine vertikale Speicherung erreicht, welche mit kleiner Grundfläche auskommt. Das trägt zu einer kleinen Grundfläche der Bearbeitungsmaschine und der Fertigungsanlage insgesamt bei. Vorzugsweise liegen die Speicherplätze unterhalb der Förderstrecke, insbesondere in der Flucht unterhalb von der Förderstrecke. Benachbart zu dem Behälterpufferspeicher ist vorzugsweise ein Förderschacht ausgebildet, durch den sich die Behälter mit der Behältertransportvorrichtung hoch und runter bewegen lassen.

Im Speziellen können die Speicherplätze durch horizontal zugängige Regalplätze ausgebildet sein. Das erlaubt eine individuelle Einlagerung und Entnahme, ohne an eine FIFO (First-In/First-Out) oder LIFO (Last-In/First-Out) Abarbeitung gebunden zu sein. Damit lassen sich die Bearbeitungsgeschwindigkeiten von Bearbeitungsmaschinen einer Fertigungsanlage aufeinander abstimmen oder priorisierte Behälter schneller durch die Fertigungsanlage schleusen als nicht-priorisierte Behälter. Bei einem alternativen direkten Aufeinanderstapeln lässt sich im einfachsten Fall immer nur der obere Behälter entnehmen, woraus eine LIFO (Last-In/First-Out) Abarbeitung folgt. Im Besonderen könnte die Behältertransportvorrichtung dazu ausgestaltet sein den untersten Behälter (dann FiFO-Abarbeitung) oder aber jeden beliebigen Behälter aus dem Behälterstapel herauszuziehen. In den meisten Fällen ist die erhöhte Speicherkapazität von Stapeln gegenüber Regalplätzen jedoch im Verhältnis zu dem technischen Mehraufwand für die flexible Entnahme aus dem Stapel nicht wirtschaftlich. Bevorzugt bietet der Behälterpufferspeicher Platz für wenigstens drei, vorzugsweise wenigstens vier und besonders bevorzugt wenigstens fünf Behälter.

Die Behältertransportvorrichtung kann wenigstens eine erste Behälteraufnahme zum Heben und Bewegen eines Behälters aufweisen. Der Behälter wird folglich nicht mehr entlang irgendeiner Bahn bewegt, sondern durch den Raum gehoben. Das ist platzsparend umsetzbar. Optional kann die Behältertransportvorrichtung wenigstens eine zweite Behälteraufnahme aufweisen, mit der ein zweiter Behälter unabhängig von der ersten Behälteraufnahme hebbar und bewegbar ist. Damit können gleichzeitig zwei Behälter manövriert werden, bspw. einer von der Förderstrecke in den Behälterpufferspeicher und ein zweiter aus dem Behälterpufferspeicher auf den oder einen der Stellplätze. Die erste und/oder zweite Behälteraufnahme können beispielsweise durch einen Lift mit Gabel, einen Greifer, Haken oder eine Saugplatte ausgebildet sein oder solch ein Bauteil zumindest aufweisen.

Die Handhabungsvorrichtung der Werkstückhandhabestation sollte weiterhin dazu ausgestaltet sein, jeweils eine optische Linse und/oder optische Rohlinse aus der Bearbeitungsstation zu entnehmen und in einem Behälter, der auf einem der Stellplätze steht, abzulegen. Die Handhabungsvorrichtung kann wenigstens einen Greifer oder wenigstens eine Saugplatte aufweisen, vorzugsweise ein Paar hiervon, um zwei optische Linsen und/oder optische Rohlinsen zu halten.

Weiterhin können die Stellplätze auf einem Drehteller ausgebildet sein, dies insbesondere derart, dass die Behälter in Abhängigkeit eines Drehwinkels des Drehtellers den Stellplatz wechseln und dadurch in den Zugriffsbereich der Behältertransportvorrichtung oder der Handhabungsvorrichtung gedreht werden. Hierdurch lassen sich Ladevorgänge der Bearbeitungsmaschine schnell durchführen, denn Behältertransportvorrichtung und Handhabungsvorrichtung können ohne Kollisionen gleichzeitig agieren. Der Drehteller ist vorzugsweise unterhalb des Behälterpufferspeichers angeordnet. Optional ragt der Drehteller teilweise in die vertikale Flucht des Behälterpufferspeichers.

Gemäß einer speziellen Ausgestaltung ist vorgesehen, dass die Behältertransportvorrichtung eine Mehrzahl an Abstell- und Aufnahmepositionen aufweist, wobei alle Abstell- und Entnahmepositionen vertikal übereinander angeordnet sind, dies vorzugsweise vertikal fluchtend. Hierdurch kann die Behältertransportvorrichtung einfach und hinsichtlich ihrer Basisfläche kompakt ausgebildet werden. Diese Mehrzahl an Abstell- und Entnahmepositionen weist vorzugsweise eine Position auf der Förderstrecke, wenigstens zwei (im Besonderen alle) Speicherplätze des Behälterpufferspeichers und eine Position, die mit einem Stellplatz der Werkstückhandhabestation übereinstimmt, auf.

Bei einer speziellen Ausführungsvariante weist der Drehteller drei oder vier Stellplätze und entsprechend drei oder vier anzufahrende Drehpositionen auf, mit denen sich die Positionen der Stellplätze tauschen lassen,
- wobei die Behältertransportvorrichtung dazu ausgestaltet ist, einen Behälter auf dem Stellplatz in zumindest einer ersten Drehposition abzustellen und zu entnehmen, im Besonderen ausschließlich in dieser ersten Drehposition, und
- wobei die Werkstückhandhabestation dazu ausgestaltet ist, optische Linsen und/oder optische Rohlinsen aus einem Behälter auf dem Stellplatz in zumindest einer aus den anderen der Drehpositionen zu entnehmen und abzulegen.

Beschränkt man den Zugang der Behältertransportvorrichtung auf einen der Stellplätze, kann dieser beispielsweise unterhalb des Behälterpufferspeichers liegen, sodass Platz gespart wird. Gleiches gilt, wenn die Werkstückhandhabestation nur auf einen der ihr zugeordneten Stellplätze zugreifen kann. Die weiteren Stellplätze dienen dann als Kurzzeitpuffer, sodass nach einer Teilumdrehung des Drehtellers (bspw. 120 Grad oder 90 Grad) sofort wieder mit dem Beladen der Bearbeitungsmaschine fortgefahren werden kann.

Bei der Behältertransportvorrichtung wird dann immer erst eine Kiste mit bearbeiten Linsen weggenommen und eine neue Kiste aufgestellt. Dann wird der Drehteller gedreht. Auf Seiten der Werkstückhandhabungsvorrichtung werden währenddessen die Linsen aus einem Behälter entnommen und bearbeitete Linsen in einem Behälter abgelegt.

Die Erfindung betrifft außerdem eine Fertigungsanlage mit einer ersten und einer zweiten Bearbeitungsmaschine wie sie vor- und nachstehend beschrieben ist, wobei die zweite Bearbeitungsmaschine so neben der ersten Bearbeitungsmaschine aufgestellt ist, dass die Eintrittsseite der zweiten Bearbeitungsmaschine an die Austrittsseite der ersten Bearbeitungsmaschine angrenzt, insbesondere unmittelbar, und die Förderstrecke der zweiten Bearbeitungsmaschine die Förderstrecke der ersten Bearbeitungsmaschine fortsetzt, insbesondere unmittelbar. Damit wird eine Fertigungsanlage mit zwei Bearbeitungsmaschinen erzielt, ohne dass es einer manuellen Verbringung der Behälter oder einer Verbringung mit einer zentralen Hauptförderstrecke mit Förderschleifen zwischen den Maschinen bedürfte.

Ein Kernanwendungsfall der Erfindung liegt dann vor, wenn die erste und die zweite Bearbeitungsmaschine jeweils eine Bearbeitungsvorrichtung aus der zweiten Gruppe, nämlich den mechanischen Bearbeitungsmaschinen, aufweisen.

Im Speziellen kann zur Kapazitätsverdopplung vorgesehen sein, dass wenigstens zwei der aneinander angrenzenden Bearbeitungsmaschinen eine baugleiche Bearbeitungsvorrichtung aufweisen. Die erste Hälfte der Behälter entnimmt dann die Behältertransportvorrichtung der ersten Bearbeitungsmaschine von der Förderstrecke und die zweite Hälfte diejenige der zweiten Bearbeitungsmaschine.

Alternativ oder ergänzend kann vorgesehen sein, dass vor der ersten Bearbeitungsmaschine eine dritte Bearbeitungsmaschine, wie sie vor- und nachstehend beschrieben ist, so aufgestellt ist, dass die Austrittsseite der dritten Bearbeitungsmaschine an die Eintrittsseite der ersten Bearbeitungsmaschine angrenzt, insbesondere unmittelbar, und die Förderstrecke der ersten Bearbeitungsmaschine die Förderstrecke der dritten Bearbeitungsmaschine fortsetzt, insbesondere unmittelbar, wobei die dritte Bearbeitungsmaschine eine Bearbeitungsvorrichtung aus der ersten Gruppe, nämlich den Vorbereitungsvorrichtungen, aufweist. (Die Nummerierung ist nicht so zu verstehen, dass die zuvor genannte zweite Bearbeitungsmaschine erforderlich ist. Die Nummerierung ist eine reine Identifikationsnummer, keine Reihenfolgenangabe oder Durchnummerierung. Dies gilt auch in der weitergehenden Beschreibung.)

Weiter alternativ oder ergänzend kann vorgesehen sein, dass hinter der zweiten Bearbeitungsmaschine eine vierte Bearbeitungsmaschine, wie sie vor- und nachstehend beschrieben ist, so aufgestellt ist, dass die Eintrittsseite der vierten Bearbeitungsmaschine an die Austrittsseite der zweiten Bearbeitungsmaschine angrenzt, insbesondere unmittelbar, und die Förderstrecke der vierten Bearbeitungsmaschine die Förderstrecke der zweiten Bearbeitungsmaschine fortsetzt, insbesondere unmittelbar, wobei die vierte Bearbeitungsmaschine eine Bearbeitungsvorrichtung aus der dritten Gruppe, nämlich den Oberflächenbehandlungsmaschinen, oder der vierten Gruppe, nämlich den Nachbereitungsmaschinen, aufweist.

In einer besonderen Ausgestaltung sind die Bearbeitungsmaschinen bezüglich dem Behälterpufferspeicher, der Behältertransportvorrichtung und optional auch zumindest im Wesentlichen der Werkstückhandhabestation baugleich ausgebildet. Auch die Förderstrecke und/oder das Gehäuse und/oder ein Maschinengestell können optional zumindest im Wesentlichen baugleich ausgeführt sein. Hierdurch wird eine große Anzahl an Gleichteilen erzielt, wodurch die Kosten für die Fertigungsanlage gering sind und Ersatzteile für Reparaturen einheitlich. Auch hinsichtlich des Service ergeben sich Vorteile, denn es ist stets ein gleichartiges System zu warten. Dabei kann insbesondere der optionale Drehteller der Werkstückhandhabestation noch recht problemlos baugleich ausgeführt sein. Die Handhabungsvorrichtung, mit der die Linsen dann zur Bearbeitungsvorrichtung bewegt werden, kann individualisiert an diese Bearbeitungsvorrichtung angepasst sein. Für diese Schnittstelle können nämlich unterschiedliche Bewegungsabläufe, Zielpositionen und Übergaben erforderlich sein.

Weiterhin bietet es sich an, entweder eine einheitliche Länge der Bearbeitungsmaschinen vorzusehen, oder aber zumindest nur eine geringe Anzahl unterschiedlicher, definierter Längen. Es resultieren ein Modul oder eine geringe Anzahl an Modulen, die dann insbesondere mit einer gewünschten Bearbeitungsvorrichtung vervollständigt werden. Auch das hält die Anzahl unterschiedlicher Bauteile der Fertigungsanlage gering. Im Schadensfall muss ggf. nicht die gesamte Maschine aus der Fertigungslinie entfernt werden, sondern es wird einfach die Bearbeitungsvorrichtung ausgetauscht. Diese Modularität macht sogar eine Umnutzung der Bearbeitungsmaschine durch einen Austausch der Bearbeitungsvorrichtung gegen eine abweichende möglich. Auch die Kosten für Maschinenmodernisierungen sind hierdurch geringer als bei einem Austausch der gesamten Bearbeitungsmaschine.

Individuell können auch die Bedienelemente und Steuerungen der Bearbeitungsvorrichtungen ausgebildet sein.

Bevorzugt sind keine zusätzlichen Förderelemente zwischen den benachbarten Bearbeitungsmaschinen angeordnet. Nicht alle Aufstellorte lassen dies allerdings zu, weswegen man optional zusätzlichen Förderelemente einsetzen kann, um bspw. einen Hallendurchbruch/Hallenübergang oder einen Höhenniveauwechsel zu überbrücken, oder ein L-förmiges oder U-förmiges Layout der Fertigungsanlage bereitzustellen.

Des Weiteren sollte die Fertigungsanlage eine zentrale Maschinensteuerung aufweisen, mit der die einzelnen Bearbeitungsmaschinen zentral angesteuert werden. Dabei können die Bearbeitungsmaschinen aber durchaus zusätzliche lokale Steuereinheiten aufweisen, die mit der zentralen Maschinensteuerung zusammenwirken.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Fertigungsanlage mit vier hintereinander gereihten Bearbeitungsmaschinen;
- Fig. 2: eine Fertigungsanlage mit U-förmigem Layout und einer Vielzahl an Bearbeitungsmaschinen;
- Fig. 3: einen perspektivischen Ausschnitt von zwei hintereinander gereihten Bearbeitungsmaschinen mit transparent dargestelltem Gehäuse und ausgeblendeten Bearbeitungsstation; und
- Fig. 4: eine perspektivische Ansicht von ausgewählten Komponenten von zwei hintereinander gereihten Bearbeitungsmaschinen.

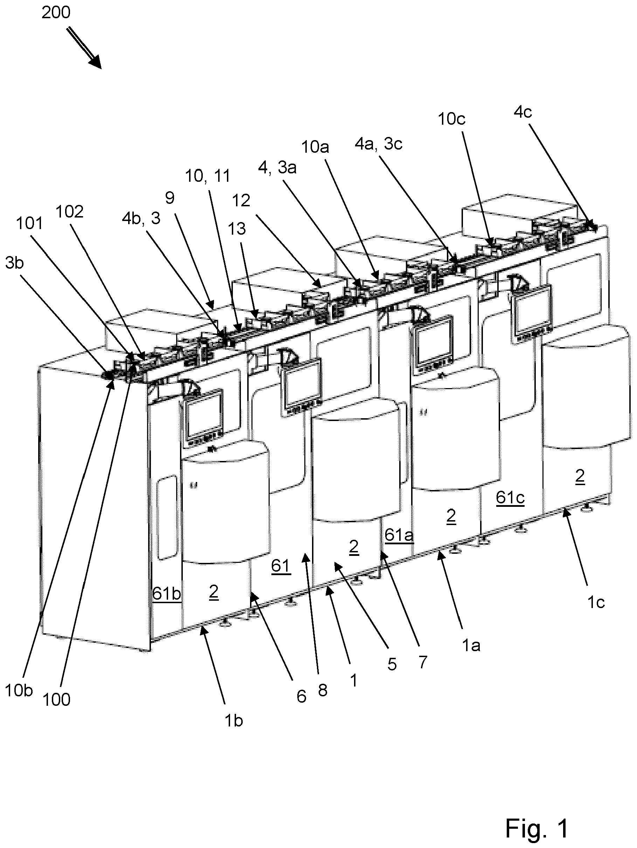

**Fig. 1** zeigt eine perspektivische Ansicht einer Fertigungsanlage 200 mit vier hintereinander gereihten Bearbeitungsmaschinen 1, 1a, 1b, 1c. Dabei ist eine zweite Bearbeitungsmaschine 1a derart hinter einer ersten Bearbeitungsmaschine 1 aufgestellt, dass eine Eintrittsseite 3a der zweiten Bearbeitungsmaschine 1a unmittelbar an eine Austrittsseite 4 der ersten Bearbeitungsmaschine 1 angrenzt, und eine Förderstrecke 10a der zweiten Bearbeitungsmaschine 1a eine Förderstrecke 10 der ersten Bearbeitungsmaschine 1 unmittelbar fortsetzt. Beispielsweise weisen die erste und die zweite Bearbeitungsmaschine 1, 1a jeweils eine Bearbeitungsvorrichtung 61, 61a aus der Gruppe der mechanischen Bearbeitungsmaschinen auf. Möglich ist dabei auch der Einsatz von zwei baugleichen Bearbeitungsvorrichtungen 61, 61a.

Vor der ersten Bearbeitungsmaschine 1 ist eine dritte Bearbeitungsmaschine 1b so aufgestellt, dass eine Austrittsseite 4b der dritten Bearbeitungsmaschine 1b unmittelbar an eine Eintrittsseite 3 der ersten Bearbeitungsmaschine 1 angrenzt, und die Förderstrecke 10 der ersten Bearbeitungsmaschine 1 eine Förderstrecke 10b der dritten Bearbeitungsmaschine 1 unmittelbar fortsetzt. Die dritte Bearbeitungsmaschine 1 kann beispielsweise eine Bearbeitungsvorrichtung 61b aus der Gruppe der Vorbereitungsvorrichtungen aufweisen.

Hinter der zweiten Bearbeitungsmaschine 1a ist noch eine vierte Bearbeitungsmaschine 1c so aufgestellt, dass eine Eintrittsseite 3c der vierten Bearbeitungsmaschine 1c unmittelbar an eine Austrittsseite 4a der zweiten Bearbeitungsmaschine 1a angrenzt, und eine Förderstrecke 10c der vierten Bearbeitungsmaschine 1c die Förderstrecke 10a der zweiten Bearbeitungsmaschine 1a unmittelbar fortsetzt. Die vierte Bearbeitungsmaschine 1c kann beispielsweise eine Bearbeitungsvorrichtung 61c aus der Gruppe der Oberflächenbehandlungsmaschinen oder der Nachbereitungsmaschinen aufweisen. Zu den unterschiedlichen Bearbeitungsvorrichtungen später mehr.

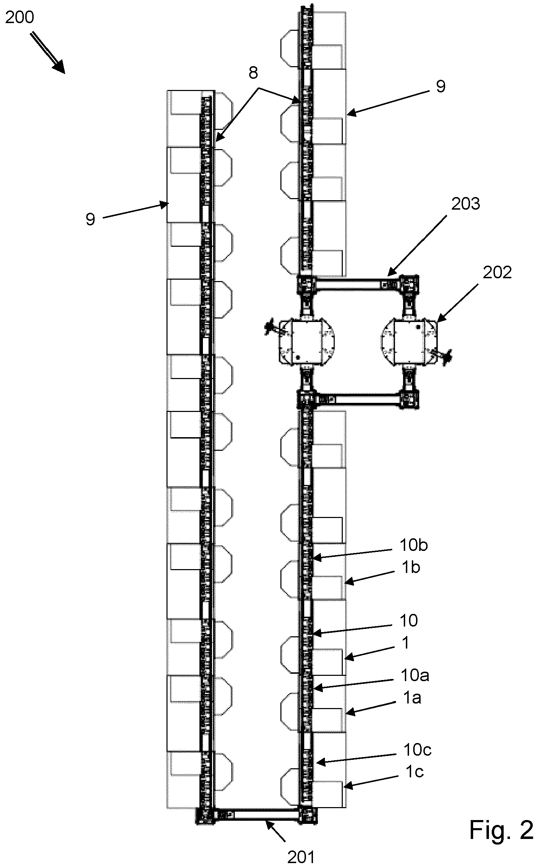

Die in Fig. 1 dargestellte Fertigungsanlage 200 kann beispielsweise zu einer längeren Fertigungsanlage 200 ergänzt sein, wie es in **Fig. 2** aus der Vogelperspektive gezeigt ist. Dort erkennt man, dass noch zahlreiche weitere Bearbeitungsmaschinen in Reihe hintereinander gesetzt sind. Bei derart langen Gesamtförderstrecken macht ein U-förmiges Layout Sinn, bei dem in der Mitte der Gesamtförderstrecke eine Richtungsumkehr 201 vorgesehen wird. Erkennbar ist dabei die Vorderseite 8, insbesondere die Bedienerseite, nach Innen ausgerichtet. Der Bediener erreicht dadurch sämtliche Bearbeitungsmaschinen auf kurzem Weg. Nach außen weisen hingegen die Rückseiten 9 der Bearbeitungsmaschinen 1, 1a, 1b, 1c, insbesondere die Serviceseiten. Für den Service ist der kurze Weg oftmals weniger relevant als großzügige Arbeitsfreiflächen.

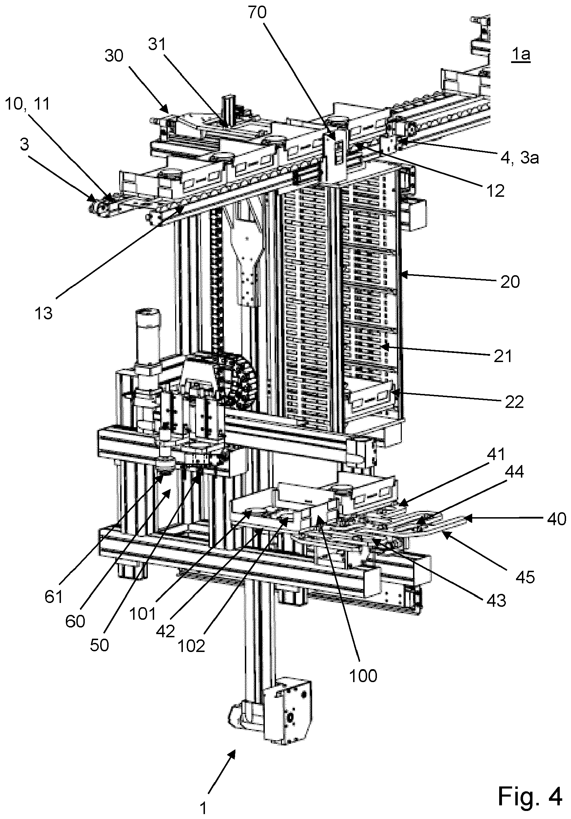

Bei der Fertigungsanlage 200 nach den **Fig. 1** **und** **4** ist es grundsätzlich möglich, dass die Bearbeitungsmaschinen 1, 1a, 1b, 1c bezüglich dem Behälterpufferspeicher 20, der Behältertransportvorrichtung 30 und zumindest im Wesentlichen der Werkstückhandhabestation 40 baugleich ausgebildet sind. Auch die Gehäuse 5, Förderstrecken 10, 10a, 10b, 10c und etwaige Maschinengestelle können zumindest im Wesentlichen baugleich sein.

Dabei können die Förderstrecken 10, 10a, 10b, 10c bzw. Bearbeitungsmaschinen 1, 1a, 1b, 1c, wie in Fig. 2 dargestellt, unterschiedliche Längen aufweisen, um bspw. unterschiedliche Bearbeitungsvorrichtungen 61, 61a, 61b, 61c aufzunehmen. Gemäß Fig. 2 beschränkt man sich dabei auf drei unterschiedliche, definierte Baulängen.

Wie man in Fig. 2 erkennt, kann trotz des modularen Grundkonzepts bei Bedarf eine Spezialmaschine 202 mit einer Förderschleife 203 zwischen die erfindungsgemäßen Bearbeitungsmaschinen 1, 1a, 1b, 1c gehängt werden, indem man dort auf eine unmittelbare Aneinanderreihung der erfindungsgemäßen Bearbeitungsmaschinen 1, 1a, 1b, 1c verzichtet.

Zwischen allen weiteren Bearbeitungsmaschinen 1, 1a, 1b, 1c sind keine zusätzlichen Förderelemente angeordnet sind. Optional besteht jedoch die Möglichkeit das Layout an den Aufstellort anzupassen, indem man bspw. mit einer separaten Förderstrecke einen Hallendurchbruch oder ein Höhenniveau überwindet, oder ein L-förmiges Layout wählt, um eine L-förmige Stellfläche zu nutzen.

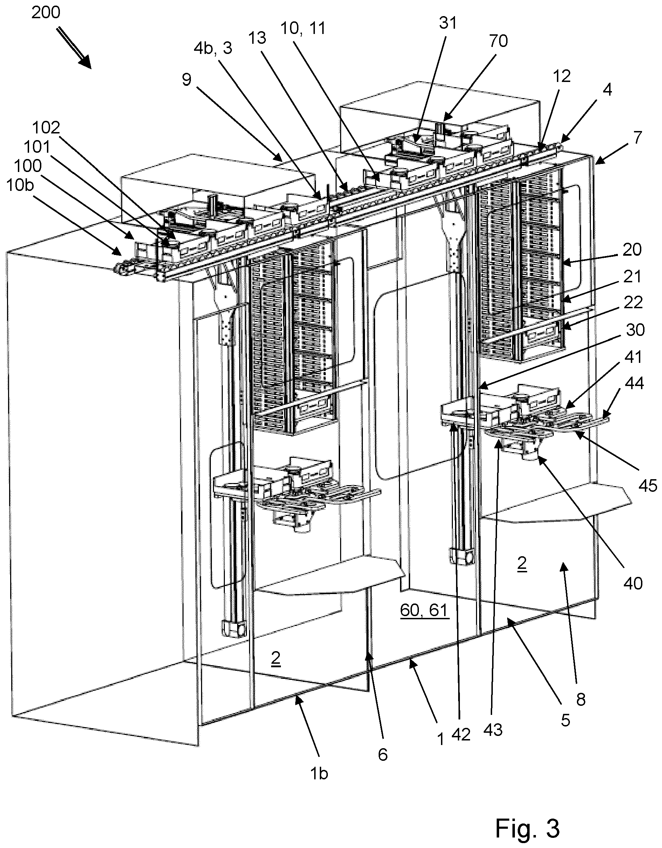

Mögliche technische Detailgestaltungen der in Fig. 1 und 2 gezeigten Bearbeitungsmaschinen 1, 1a, 1b, 1c ergeben sich aus den **Fig. 3** **und** **4****.**

**Fig. 3** zeigt in einem perspektivischen Ausschnitt von zwei hintereinander gereihten Bearbeitungsmaschinen 1, 1b mit transparent dargestelltem Gehäuse 5 und ausgeblendeten Bearbeitungsstationen 60. In **Fig. 4** sind nochmals in einer perspektivischen Ansicht ausgewählte Komponenten von zwei hintereinander gereihten Bearbeitungsmaschinen 1, 1a zu sehen. Gleiche Bezugsziffern betreffen daher typgleiche Bauteile.

Man erkennt insbesondere in Fig. 3 eine Bearbeitungsmaschine 1 für die Bearbeitung optischer Linsen und/oder optischer Rohlinsen 101, 102. Die ganze Bearbeitungsmaschine 1 ist wie auch die zweite Bearbeitungsmaschine 1b als Baueinheit 2 ausgebildet. Sie weist eine horizontal verlaufende Förderstrecke 10 für den Transport von Behältern 100 enthaltend exakt zwei optische Linsen und/oder optische Rohlinsen 101, 102 auf. Die Förderstrecke 10 erstreckt sich von einer Eintrittsseite 3 der Baueinheit 2 zu einer gegenüberliegenden Austrittsseite 4 der Baueinheit 2, dies insbesondere derart, dass eine bezüglich der Förderstrecke 10 baugleich ausgeführte zweite Bearbeitungsmaschine 1b so neben die Bearbeitungsmaschine 1 stellbar ist, dass die Austrittsseite 4b der zweiten Bearbeitungsmaschine 1b unmittelbar an die Eintrittsseite 3 der Bearbeitungsmaschine 1 angrenzt, und die Förderstrecke 10 der Bearbeitungsmaschine 1 die Förderstrecke 10b der zweiten Bearbeitungsmaschine 1b fortsetzt. Erkennbar sind die Eintrittsseite 3 und die Austrittsseite 4 parallel zueinander und quer, hier senkrecht, zu der Förderstrecke 10 ausgerichtet.

Die Förderstrecke 10 kann ein Förderband oder eine Rollenbahn 11 aufweisen und ist vorliegend über die gesamte Länge linear ausgebildet, insbesondere sowohl von oben betrachtet, als auch im Höhenprofil betrachtet. Sie ist außerdem geodätisch horizontal ausgerichtet.

In dem Gehäuse 5 der Baueinheit 2 ist ein Behälterpufferspeicher 20 mit mehreren, hier sechs, Speicherplätzen 21, 22 angeordnet. Die Speicherplätze 21, 22 sind vertikal übereinander angeordnet und als horizontal zugängige Regalplätze ausgeführt. Die Speicherplätze 21, 22 liegen in der Flucht unterhalb der Förderstrecke 10; dies kann vollständig oder teilweise in der Flucht sein. Vor den Speicherplätzen 21, 22 ist ein vertikaler Schacht ausgebildet, durch den die Behälter 100 vor dem Behälterpufferspeicher 20 hoch und runter bewegt werden können, insbesondere ohne diese schräg stellen zu müssen. Dazu hat der Schacht eine Größere Grundfläche als die Behälter 100.

Die Bearbeitungsmaschine 1 weist für den Transport der Behälter 100 eine Behältertransportvorrichtung 30 auf. Die Behältertransportvorrichtung 30 ist dazu ausgestaltet, Behälter 100 von der Förderstrecke 10 zu entnehmen und im Behälterpufferspeicher 20 einzulagern. Sie übernimmt auch den Rücktransport der Behälter 100 auf die Förderstrecke 10. Erkennbar verläuft ein erster Abschnitt 12 der Förderstrecke 10 an der Behältertransportvorrichtung 30 vorbei und ein zweiter Abschnitt 13 der Förderstrecke 10 verläuft freiliegend auf der Oberseite des Gehäuses 5. Der zweite Abschnitt 13 liegt vorliegend in Förderrichtung der Förderstrecke 10 vor dem ersten Abschnitt 12. Im Bereich dieses ersten Abschnitts 12 ist ein Lesegerät 70 zum Auslesen von Informationen von Behältern 100 und/oder optischen Linsen und/oder optischen Rohlinsen 101, 102, die sich auf der Förderstrecke 10 befinden, angeordnet. Die Behältertransportvorrichtung 30 ist mit einer Entnahmelogik angesteuert, welche unter Einbezug der Informationen des Lesegeräts 70 darüber entscheidet, ob ein Behälter 100 von der Förderstrecke 10 entnommen wird oder der Behälter 100 ohne Entnahme mit der Förderstrecke 10 zur Austrittsseite 4 gefördert wird.

Zur Handhabung der Behälter 100 weist die Behältertransportvorrichtung 30 wenigstens eine erste Behälteraufnahme 31 zum Heben und Bewegen eines Behälters 100 auf. Dabei kann es sich um einen Lift mit Behälterschieber, Greifer, Gabel, Haken oder Saugplatte handeln oder solch ein Bauteil zumindest aufweisen. Vorliegend ist eine gabelförmige Aufnahme gezeigt, die unter den Behälter 100 fährt, diesen anheben kann und in den Bereich eines Förderschachtes benachbart zum Behälterpufferspeicher 20 hebt. In diesem Förderschacht wird der Behälter 100 dann hoch und runter bewegt.

Das Gehäuse 5 weist eine Vorderseite 8 und eine Rückseite 9 auf und die Förderstrecke 10 verläuft parallel zwischen der Vorderseite 8 und der Rückseite 9 von der Eintrittsseite 3 zur Austrittsseite 4. Eine gerade erste Gehäusewandung 6 des Gehäuses liegt auf der Eintrittsseite 3, und eine zur ersten Gehäusewandung 6 parallele zweite Gehäusewandung 7 liegt auf der Austrittsseite 4. Die Förderstrecke 10 führt nicht über die erste und zweite Gehäusewandung 6, 7 hinaus (allenfalls wenige Zentimeter (< 5cm)). Auf der Vorderseite 8 können insbesondere Bedienelement angeordnet werden. Auf der Rückseite 9 des Gehäuses 5 können Serviceklappen vorgesehen sein. Optional werden auch auf der Rückseite 9 Bedienungselemente angeordnet, um dem Servicepersonal bestimmte Bedienungen der Bearbeitungsmaschine 1 zu erlauben, ohne dazu auf die gegenüberliegende Maschinenseite zu müssen.

Die Behälter 100, auch als Tray oder Job-Tray bezeichenbar, bestehen vorzugsweise aus Kunststoff und haben eine offene Oberseite. Hierin liegen vorliegend stets exakt zwei optische Linsen oder optische Rohlinsen 101, 102. Diese können aus optisch durchlässigem Glas oder Kunststoff bestehen und weisen gegenüberliegende Flächen auf, die entweder bereits optisch wirksam sind oder zu optisch wirksamen Flächen bearbeitet werden. Die optisch wirksamen Flächen 101, 102 können konkav und/oder konvex ausgebildet sein. Die optischen Linsen oder optischen Rohlinsen 101, 102 können einen runden Umfang aufweisen, bei der Brillenglasfertigung jedoch auch oval oder an die Öffnung eines Brillengestells angepasst sein.

Weiterhin weist die Bearbeitungsmaschine 1 eine Werkstückhandhabestation 40 mit exakt vier Stellplätzen 41, 42, 43, 44 für je einen Behälter 100 auf. Die vier Stellplätze 41, 42, 43, 44 sind auf einem Drehteller 45 ausgebildet, sodass die Behälter 100 in Abhängigkeit eines Drehwinkels des Drehtellers 45 den Stellplatz 41, 42, 43, 44 wechseln und dadurch in den Zugriffsbereich der Behältertransportvorrichtung 30 oder einer Handhabungsvorrichtung 50 gedreht werden. Die Behältertransportvorrichtung 30 und die Handhabungsvorrichtung 50 können jeweils auf zumindest einen der Stellplätze 41, 42, 43, 44 zugreifen. Der Drehteller 45 weist vier anzufahrende Drehpositionen auf, wobei die Behältertransportvorrichtung 30 dazu ausgestaltet ist, einen Behälter 100 auf dem Stellplatz 41 in der ersten Drehposition abzustellen und zu entnehmen.

Die Werkstückhandhabestation 40 weist die Handhabungsvorrichtung 50 auf, die dazu ausgestaltet ist, die optischen Linsen und/oder optischen Rohlinsen 101, 102 aus einem Behälter 100, der auf dem oder einem der Stellplätze 42, 43 steht, zu entnehmen und an eine Bearbeitungsstation 60 zu übergeben. Zudem ist die Handhabungsvorrichtung 50 dazu ausgestaltet, die optischen Linsen und/oder optischen Rohlinsen 101, 102 aus der Bearbeitungsstation 60 zu entnehmen und in einem Behälter 100, der auf einem der Stellplätze 42, 43 steht, abzulegen. Dazu kann die Handhabungsvorrichtung 50 wenigstens einen Greifer oder wenigstens eine Saugplatte aufweisen, vorzugsweise ein Paar hiervon, um eine oder zwei optische Linsen und/oder optische Rohlinsen 101, 102 zu halten. Auch Varianten mit vier Greifern oder Saugplatten sind denkbar, um zwischen der Entnahme eines Linsenpaars aus der Bearbeitungsstation und dem neuen Zuführen eines zu bearbeitenden Linsenpaars nicht zurück zu einem Behälter 100 auf den Stellplätzen 42, 43 fahren zu müssen.

Die Bearbeitungsstation 60 kann insbesondere eine Bearbeitungsvorrichtung 61 aus einer
a) ersten Gruppe umfassend Vorbereitungsvorrichtungen, nämlich
   o Entpackungsvorrichtungen zur Entnahme der optischen Linsen und/oder optischen Rohlinsen 101, 102 aus einer Verpackung;
   o Reinigungsvorrichtungen zur Reinigung der optischen Linsen und/oder optischen Rohlinsen 101, 102;
   o Aufblockvorrichtungen zur Verbindung der optischen Linsen und/oder optischen Rohlinsen 101, 102 mit einem Blockstück;
   o Folierungsvorrichtungen zur Beklebung von Flächen der optischen Linsen und/oder optischen Rohlinsen 101, 102 mit Schutzfolie; und
   o Kennzeichnungsvorrichtungen zum Aufbringen von Informationen auf die optischen Linsen und/oder optischen Rohlinsen 101, 102;
   und/oder
b) zweiten Gruppe umfassend mechanische Bearbeitungsmaschinen, nämlich
   o Fräsmaschinen zur fräsenden Bearbeitung der optischen Linsen und/oder optischen Rohlinsen 101, 102;
   o Drehmaschinen zur drehenden Bearbeitung der optischen Linsen und/oder optischen Rohlinsen 101, 102;
   o Schleifmaschinen zum Schleifen der optischen Linsen und/oder optischen Rohlinsen 101, 102;
   o Poliermaschinen zum Polieren der optischen Linsen und/oder optischen Rohlinsen 101, 102; und
   o Umfangsbearbeitungsmaschinen zur Herstellung einer Umfangskontur der optischen Linsen und/oder optischen Rohlinsen 101, 102;
   und/oder
c) dritten Gruppe umfassend Oberflächenbehandlungsmaschinen, nämlich
   o Beschichtungsvorrichtungen zur Beschichtung von Flächen der optischen Linsen und/oder optischen Rohlinsen 101, 102; und
   o Temperierungsvorrichtungen zur thermischen Behandlung der optischen Linsen und/oder optischen Rohlinsen 101, 102;
   und/oder
d) vierten Gruppe umfassend Nachbereitungsmaschinen, nämlich
   o Messvorrichtungen zur Bestimmung von Parametern der optischen Linsen und/oder optischen Rohlinsen 101, 102;
   o Folienentfernungsvorrichtungen zum Entfernen von Schutzfolien von den optischen Linsen und/oder optischen Rohlinsen 101, 102;
   o Abblockvorrichtungen zum Trennen der optischen Linsen und/oder optischen Rohlinsen 101, 102 von einem Blockstück;
   o Reinigungsvorrichtungen zum Entfernen von Bearbeitungsrückständen von den optischen Linsen und/oder optischen Rohlinsen 101, 102; und
   o Verpackungsvorrichtungen zum Verpacken der optischen Linsen und/oder optischen Rohlinsen 101, 102 in einer Verpackung;
   aufweisen.

Die Erfindung wird in den Ansprüchen definiert.

### Bezugszeichenliste

| | | | |
|---|---|---|---|
| 1 | Bearbeitungsmaschine (BM) | 60 | Bearbeitungsstation |
| 2 | Baueinheit | 61 | Bearbeitungsvorrichtung |
| 3 | Eintrittsseite der Baueinheit | | |
| 4 | Austrittsseite der Baueinheit | 70 | Lesegerät |
| 5 | Gehäuse | | |
| 6 | erste Gehäusewandung | 100 | Behälter |
| 7 | zweite Gehäusewandung | 101 | optische Linse oder optische Rohlinse |
| 8 | Vorderseite | | |
| 9 | Rückseite | 102 | optische Linse oder optische Rohlinse |
| 10 | Förderstrecke | | |
| 11 | Rollenbahn | 200 | Fertigungsanlage |
| 12 | erster Abschnitt der Förderstrecke | 201 | Richtungsumkehr |
| 13 | zweiter Abschnitt der Förderstrecke | | |
| | | 1a | zweite Bearbeitungsmaschine |
| 20 | Behälterpufferspeicher | 3a | Eintrittsseite (2.BM) |
| 21 | Speicherplatz | 4a | Austrittsseite (2.BM) |
| 22 | Speicherplatz | 10a | Förderstrecke (2.BM) |
| | | 61a | Bearbeitungsvorrichtung (2.BM) |
| 30 | Behältertransportvorrichtung | | |
| 31 | erste Behälteraufnahme | 1b | dritte Bearbeitungsmaschine |
| | | 3b | Eintrittsseite (3.BM) |
| 40 | Werkstückhandhabestation | 4b | Austrittsseite (3.BM) |
| 41 | Stellplatz | 10b | Förderstrecke (3.BM) |
| 42 | Stellplatz | 60b | Bearbeitungsstation (3.BM) |
| 43 | Stellplatz | 61b | Bearbeitungsvorrichtung (3.BM) |
| 44 | Stellplatz | | |
| 45 | Drehteller | 1c | vierte Bearbeitungsmaschine |
| 50 | Handhabungsvorrichtung der Werkstückhandhabestation | 3c | Eintrittsseite (4.BM) |
| | | 4c | Austrittsseite (4.BM) |
| | | 10c | Förderstrecke (4.BM) |
| | | 61c | Bearbeitungsvorrichtung (4.BM) |

## Patentansprüche

1. **Bearbeitungsmaschine** (1) für die Bearbeitung optischer Linsen und/oder optischer Rohlinsen (101, 102), wobei die Bearbeitungsmaschine (1) von einer Baueinheit (2) ausgebildet ist,
- mit einer horizontal ausgerichteten Förderstrecke (10) für den Transport von Behältern (100) enthaltend wenigstens eine, vorzugsweise wenigstens zwei, und besonders bevorzugt exakt zwei optische Linsen und/oder optische Rohlinsen (101, 102),
o wobei sich die Förderstrecke (10) von einer Eintrittsseite (3) der Baueinheit (2) zu einer gegenüberliegenden Austrittsseite (4) der Baueinheit (2) erstreckt,
**dadurch gekennzeichnet, dass**
- die Bearbeitungsmaschine (1) einen Behälterpufferspeicher (20) und eine Behältertransportvorrichtung (30) aufweist,
- wobei die Behältertransportvorrichtung (30) dazu ausgestaltet ist, Behälter (100) von der Förderstrecke (10) zu entnehmen und im Behälterpufferspeicher (20) einzulagern, und die dazu ausgestaltet ist, Behälter (100) zurück auf die Förderstrecke (10) zu transportieren,
- wobei die Bearbeitungsmaschine (1) eine Werkstückhandhabestation (40) mit wenigstens einem, vorzugsweise wenigstens zwei, weiter bevorzugt drei und besonders bevorzugt vier Stellplätzen (41, 42, 43, 44) für je einen Behälter (100) aufweist,
o wobei die Behältertransportvorrichtung (30) dazu ausgestaltet ist, Behälter (100) von dem Behälterpufferspeicher (20) zu dem oder wenigstens einem der Stellplätze (41, 42, 43, 44) zu transportieren,
o wobei die Werkstückhandhabestation (40) eine Handhabungsvorrichtung (50) aufweist, die dazu ausgestaltet ist, die optischen Linsen und/oder optischen Rohlinsen (101, 102) aus einem Behälter (100), der auf dem oder einem der Stellplätze (41, 42, 43, 44) steht, zu entnehmen und an eine Bearbeitungsstation (60) zu übergeben.

2. Bearbeitungsmaschine (1) gemäß Anspruch 1, **dadurch gekennzeichnet, dass** die Bearbeitungsstation (60) eine Bearbeitungsvorrichtung (61) aus einer
a) ersten Gruppe umfassend Vorbereitungsvorrichtungen, nämlich
o Entpackungsvorrichtungen zur Entnahme der optischen Linsen und/oder optischen Rohlinsen (101, 102) aus einer Verpackung;
o Reinigungsvorrichtungen zur Reinigung der optischen Linsen und/oder optischen Rohlinsen (101, 102);
o Aufblockvorrichtungen zur Verbindung der optischen Linsen und/oder optischen Rohlinsen (101, 102) mit einem Blockstück;
o Folierungsvorrichtungen zur Beklebung von Flächen der optischen Linsen und/oder optischen Rohlinsen (101, 102) mit Schutzfolie; und
o Kennzeichnungsvorrichtungen zum Aufbringen von Informationen auf die optischen Linsen und/oder optischen Rohlinsen (101, 102);
und/oder
b) zweiten Gruppe umfassend mechanische Bearbeitungsmaschinen, nämlich
o Fräsmaschinen zur fräsenden Bearbeitung der optischen Linsen und/oder optischen Rohlinsen (101, 102);
o Drehmaschinen zur drehenden Bearbeitung der optischen Linsen und/oder optischen Rohlinsen (101, 102);
o Schleifmaschinen zum Schleifen der optischen Linsen und/oder optischen Rohlinsen (101, 102);
o Poliermaschinen zum Polieren der optischen Linsen und/oder optischen Rohlinsen (101, 102); und
o Umfangsbearbeitungsmaschinen zur Herstellung einer Umfangskontur der optischen Linsen und/oder optischen Rohlinsen (101, 102);
und/oder
c) dritten Gruppe umfassend Oberflächenbehandlungsmaschinen, nämlich
o Beschichtungsvorrichtungen zur Beschichtung von Flächen der optischen Linsen und/oder optischen Rohlinsen (101, 102); und
o Temperierungsvorrichtungen zur thermischen Behandlung der optischen Linsen und/oder optischen Rohlinsen (101, 102);
und/oder
d) vierten Gruppe umfassend Nachbereitungsmaschinen, nämlich
o Messvorrichtungen zur Bestimmung von Parametern der optischen Linsen und/oder optischen Rohlinsen (101, 102);
o Folienentfernungsvorrichtungen zum Entfernen von Schutzfolien von den optischen Linsen und/oder optischen Rohlinsen (101, 102);
o Abblockvorrichtungen zum Trennen der optischen Linsen und/oder optischen Rohlinsen (101, 102) von einem Blockstück;
o Reinigungsvorrichtungen zum Entfernen von Bearbeitungsrückständen von den optischen Linsen und/oder optischen Rohlinsen (101, 102); und
o Verpackungsvorrichtungen zum Verpacken der optischen Linsen und/oder optischen Rohlinsen (101, 102) in einer Verpackung;
aufweist.

3. Bearbeitungsmaschine (1) gemäß einem der Ansprüche 1 oder 2, **dadurch gekennzeichnet, dass** sich die Förderstrecke (10) derart von der Eintrittsseite (3) der Baueinheit (2) zu der gegenüberliegenden Austrittseite (4) der Baueinheit (2) erstreckt, dass eine bezüglich der Förderstrecke (10) baugleich ausgeführte zweite Bearbeitungsmaschine (1a) so neben die Bearbeitungsmaschine (1) stellbar ist, dass die Eintrittsseite (3a) der zweiten Bearbeitungsmaschine (1a) an die Austrittsseite (4) der Bearbeitungsmaschine (1) angrenzt, und die Förderstrecke (10a) der zweiten Bearbeitungsmaschine (1a) die Förderstrecke (10) der Bearbeitungsmaschine (1) fortsetzt.

4. Bearbeitungsmaschine (1) gemäß Anspruch 3, **dadurch gekennzeichnet, dass** die Eintrittsseite (3) und die Austrittsseite (4) parallel zueinander und quer zu der Förderstrecke (10) ausgerichtet sind.

5. Bearbeitungsmaschine (1) gemäß einem der vorhergehenden Ansprüche, **dadurch gekennzeichnet, dass** die Förderstrecke (10) ein Förderband oder eine Rollenbahn (11) aufweist.

6. Bearbeitungsmaschine (1) gemäß einem der vorhergehenden Ansprüche, **dadurch gekennzeichnet, dass** die Förderstrecke (10) linear ausgebildet ist.

7. Bearbeitungsmaschine (1) gemäß einem der vorhergehenden Ansprüche, **dadurch gekennzeichnet, dass** diese ein Lesegerät (70) zum Auslesen von Informationen von Behältern (100) und/oder optischen Linsen und/oder optischen Rohlinsen (101, 102) auf der Förderstrecke (10) aufweist, und die Behältertransportvorrichtung (30) mit einer Entnahmelogik angesteuert ist, welche darüber entscheidet, ob ein Behälter (100) von der Förderstrecke (10) entnommen wird oder der Behälter (100) ohne Entnahme zur Austrittsseite (4) gefördert wird.

8. Bearbeitungsmaschine (1) gemäß einem der vorhergehenden Ansprüche, **dadurch gekennzeichnet, dass** die Baueinheit (2) ein Gehäuse (5) aufweist, das eine gerade erste Gehäusewandung (6) auf der Eintrittsseite (3) aufweist, und das eine zur ersten Gehäusewandung (6) parallele zweite Gehäusewandung (7) auf der Austrittsseite (4) aufweist.

9. Bearbeitungsmaschine (1) gemäß Anspruch 8, **dadurch gekennzeichnet, dass** die Förderstrecke (10) nicht über die erste und zweite Gehäusewandung (6, 7) hinausführt.

10. Bearbeitungsmaschine (1) gemäß einem der Ansprüche 8 oder 9, **dadurch gekennzeichnet, dass** wobei die Behältertransportvorrichtung (30) dazu ausgestaltet ist, Behälter (100) von einem Abschnitt (12) der Förderstrecke (10) zu entnehmen, nicht jedoch von einem anderen Abschnitt (13) der Förderstrecke (10).

11. Bearbeitungsmaschine (1) gemäß einem der vorhergehenden Ansprüche, **dadurch gekennzeichnet, dass** der Behälterpufferspeicher (20) übereinander angeordnete Speicherplätze (21, 22) für die Behälter (100) aufweist.

12. Bearbeitungsmaschine (1) gemäß Anspruch 11, **dadurch gekennzeichnet, dass** die Speicherplätze (21, 22) durch horizontal zugängige Regalplätze ausgebildet sind.

13. Bearbeitungsmaschine (1) gemäß einem der vorhergehenden Ansprüche, **dadurch gekennzeichnet, dass** die Stellplätze (41, 42, 43, 44) auf einem Drehteller (45) ausgebildet sind.

14. **Fertigungsanlage** (200) mit einer ersten und einer zweiten Bearbeitungsmaschine (1, 1a) nach einem der vorhergehenden Ansprüche, wobei die zweite Bearbeitungsmaschine (1a) so neben der ersten Bearbeitungsmaschine (1) aufgestellt ist, dass die Eintrittsseite (3a) der zweiten Bearbeitungsmaschine (1a) an die Austrittsseite (4) der ersten Bearbeitungsmaschine (1) angrenzt, und die Förderstrecke (10a) der zweiten Bearbeitungsmaschine (1a) die Förderstrecke (10) der ersten Bearbeitungsmaschine (1) fortsetzt.

15. Fertigungsanlage (200) gemäß Anspruch 14, **dadurch gekennzeichnet, dass** die Bearbeitungsmaschinen (1, 1a, 1b, 1c) bezüglich dem Behälterpufferspeicher (20) und der Behältertransportvorrichtung (30) baugleich ausgebildet sind.

## Claims

1. **Machining apparatus** (1) for machining optical lenses and/or optical lens blanks (101, 102), the machining apparatus (1) being configured by a module (2)
- having a horizontally aligned conveyor section (10) for transporting containers (100) containing at least one, preferably at least two, and particularly preferably exactly two, optical lenses and/or optical lens blanks (101, 102),
o the conveyor section (10) extending from an entry side (3) of the module (2) to an opposite exit side (4) of the module (2),
**characterized in that**
- the machining apparatus (1) has a container buffer store (20) and a container transport device (30),
- the container transport device (30) being designed to retrieve containers (100) from the conveyor section (10) and store said containers (100) in the container buffer store (20), and being designed to transport containers (100) back onto the conveyor section (10),
- the machining apparatus (1) having a workpiece handling station (40) having at least one, preferably at least two, furthermore preferably three, and particularly preferably four, parking spaces (41, 42, 43, 44) for in each case one container (100),
o the container transport device (30) being designed to transport containers (100) from the container buffer store (20) to the parking space, or at least one of the parking spaces (41, 42, 43, 44),
o the workpiece handling station (40) having a handling device (50) which is designed to retrieve the optical lenses and/or optical lens blanks (101, 102) from a container (100) standing on the parking space, or one of the parking spaces (41, 42, 43, 44), and to transfer said optical lenses and/or optical lens blanks (101, 102) to a machining station (60).

2. Machining apparatus (1) according to Claim 1, **characterized in that** the machining station (60) has a machining device (61) from a
a) first group comprising preparatory devices, specifically
o unpacking devices for retrieving the optical lenses and/or optical lens blanks (101, 102) from a packaging;
o cleaning devices for cleaning the optical lenses and/or optical lens blanks (101, 102);
o block-mounting devices for connecting the optical lenses and/or optical lens blanks (101, 102) to a blocking piece;
o laminating devices for adhesively bonding a protective film to areas of the optical lenses and/or optical lens blanks (101, 102); and
o marking devices for applying items of information to the optical lenses and/or optical lens blanks (101, 102);
and/or
b) second group comprising mechanical machining apparatuses, specifically
o milling machines for machining the optical lenses and/or optical lens blanks (101, 102) by milling;
o turning machines for machining the optical lenses and/or optical lens blanks (101, 102) by turning;
o grinding machines for grinding the optical lenses and/or optical lens blanks (101, 102);
o polishing machines for polishing the optical lenses and/or optical lens blanks (101, 102); and
o circumferential machining apparatuses for producing a circumferential contour of the optical lenses and/or optical lens blanks (101, 102);
and/or
c) third group comprising surface treatment machines, specifically
o coating devices for coating surfaces of the optical lenses and/or optical lens blanks (101, 102); and
o temperature-control devices for thermal treatment of the optical lenses and/or optical lens blanks (101, 102);
and/or
d) fourth group comprising post-machining apparatuses, specifically
o measuring devices for determining parameters of the optical lenses and/or optical lens blanks (101, 102);
o film removal devices for removing protective films from the optical lenses and/or optical lens blanks (101, 102);
o unblocking devices for separating the optical lenses and/or optical lens blanks (101, 102) from a blocking piece;
o cleaning devices for removing machining residues from the optical lenses and/or optical lens blanks (101, 102); and
o packing devices for packing the optical lenses and/or optical lens blanks (101, 102) in a packaging.

3. Machining apparatus (1) according to one of Claims 1 or 2, **characterized in that** the conveyor section (10) extends from the entry side (3) of the module (2) to the opposite exit side (4) of the module (2) in such a manner that a second machining apparatus (1a), embodied identically in terms of construction of the conveyor section (10), is able to be placed next to the machining apparatus (1) so that the entry side (3a) of the second machining apparatus (1a) is contiguous to the exit side (4) of the machining apparatus (1), and the conveyor section (10a) of the second machining apparatus (1a) is a continuation of the conveyor section (10) of the machining apparatus (1).

4. Machining apparatus (1) according to Claim 3, **characterized in that** the entry side (3) and the exit side (4) are aligned so as to be mutually parallel and transverse to the conveyor section (10) .

5. Machining apparatus (1) according to one of the preceding claims, **characterized in that** the conveyor section (10) has a conveyor belt or a roller track (11).

6. Machining apparatus (1) according to one of the preceding claims, **characterized in that** die conveyor section (10) is of linear configuration.

7. Machining apparatus (1) according to one of the preceding claims, **characterized in that** said machining apparatus (1) has a scanner (70) for reading items of information from containers (100) and/or optical lenses and/or optical lens blanks (101, 102) on the conveyor section (10), and the container transport device (30) is actuated by a retrieval logic which decides whether a container (100) is retrieved from the conveyor section (10) or the container (100) is conveyed to the exit side (4) without being retrieved.

8. Machining apparatus (1) according to one of the preceding claims, **characterized in that** the module (2) has a housing (5) which on the entry side (3) has a straight first housing wall (5), and which on the exit side (4) has a second housing wall (7) that is parallel to the first housing wall (6).

9. Machining apparatus (1) according to Claim 8, **characterized in that** the conveyor section (10) does not extend beyond the first and the second housing wall (6, 7).

10. Machining apparatus (1) according to one of Claims 8 or 9, **characterized in that** the container transport device (30) is designed to retrieve containers (100) from one portion (12) of the conveyor section (10) but not from another portion (13) of the conveyor section (10).

11. Machining apparatus (1) according to one of the preceding claims, **characterized in that** the container buffer store (20) has storage spaces (21, 22) that are disposed on top of one another for the containers (100).

12. Machining apparatus (1) according to Claim 11, **characterized in that** the storage spaces (21, 22) are configured by horizontally accessible shelf spaces.

13. Machining apparatus (1) according to one of the preceding claims, **characterized in that** parking spaces (41, 42, 43, 44) are configured on a turntable (45).

14. **Manufacturing system** (200) having a first and a second machining apparatus (1, 1a) according to one of the preceding claims, the second machining apparatus (1a) being placed next to the first machining apparatus (1) so that the entry side (3a) of the second machining apparatus (1a) is contiguous to the exit side (4) of the first machining apparatus (1), and the conveyor section (10a) of the second machining apparatus (1a) is a continuation of the conveyor section (10) of the first machining apparatus (1).

15. Manufacturing system (200) according to Claim 14, **characterized in that** the machining apparatuses (1, 1a, 1b, 1c) in terms of the container buffer store (20) and the container transport device (30) are of identical configuration.

## Revendications

1. **Machine d'usinage** (1) pour l'usinage de lentilles optiques et/ou de lentilles optiques brutes (101, 102), la machine d'usinage (1) étant formée par une unité de construction (2),
- avec une voie de transport (10) orientée horizontalement pour le transport de récipients (100) contenant au moins une, de préférence au moins deux et de manière particulièrement préférée exactement deux lentilles optiques et/ou lentilles optiques brutes (101, 102),
o la voie de transport (10) s'étendant d'un côté d'entrée (3) de l'unité de construction (2) à un côté de sortie opposé (4) de l'unité de construction (2),
**caractérisée en ce que**
- la machine d'usinage (1) présente un réservoir tampon de récipients (20) et un dispositif de transport de récipients (30),
- le dispositif de transport de récipients (30) étant conçu pour extraire des récipients (100) de la voie de transport (10) et les stocker dans le réservoir tampon de récipients (20), et étant conçu pour transporter des récipients (100) en retour sur la voie de transport (10),
- la machine d'usinage (1) présentant un poste de manipulation de pièces (40) avec au moins un, de préférence au moins deux, de manière davantage préférée trois et de manière particulièrement préférée quatre emplacements (41, 42, 43, 44) pour un récipient (100) chacun,
o le dispositif de transport de récipients (30) étant conçu pour transporter des récipients (100) du réservoir tampon de récipients (20) vers l'emplacement ou au moins l'un des emplacements (41, 42, 43, 44),
o le poste de manipulation de pièces (40) présentant un dispositif de manipulation (50) qui est conçu pour extraire les lentilles optiques et/ou les lentilles optiques brutes (101, 102) d'un récipient (100) qui se trouve sur l'emplacement ou l'un des emplacements (41, 42, 43, 44) et pour les transférer à un poste d'usinage (60).

2. Machine d'usinage (1) selon la revendication 1, **caractérisée en ce que** le poste d'usinage (60) présente un dispositif d'usinage (61)
a) d'un premier groupe comprenant des dispositifs de préparation, à savoir
o des dispositifs de déconditionnement pour extraire les lentilles optiques et/ou les lentilles optiques brutes (101, 102) d'un emballage ;
o des dispositifs de nettoyage pour nettoyer les lentilles optiques et/ou les lentilles optiques brutes (101, 102) ;
o des dispositifs de blocage pour relier les lentilles optiques et/ou les lentilles optiques brutes (101, 102) à un bloc ;
o des dispositifs de filmage pour recouvrir des surfaces des lentilles optiques et/ou des lentilles optiques brutes (101, 102) d'un film protecteur ; et
o des dispositifs d'identification pour appliquer des informations sur les lentilles optiques et/ou les lentilles optiques brutes (101, 102) ;
et/ou
b) d'un deuxième groupe comprenant des machines d'usinage mécanique, à savoir
o des machines de fraisage pour usiner par fraisage les lentilles optiques et/ou les lentilles optiques brutes (101, 102) ;
o des machines de tournage pour usiner par tournage les lentilles optiques et/ou les lentilles optiques brutes (101, 102) ;
o des machines de meulage pour meuler les lentilles optiques et/ou les lentilles optiques brutes (101, 102) ;
o des machines de polissage pour polir les lentilles optiques et/ou les lentilles optiques brutes (101, 102) ; et
o des machines d'usinage circonférentiel pour produire un contour circonférentiel des lentilles optiques et/ou des lentilles optiques brutes (101, 102) ; et/ou
c) d'un troisième groupe comprenant des machines de traitement de surface, à savoir
o des dispositifs de revêtement pour revêtir des surfaces des lentilles optiques et/ou des lentilles optiques brutes (101, 102) ; et
o des dispositifs de régulation de température pour traiter thermiquement les lentilles optiques et/ou les lentilles optiques brutes (101, 102) ;
et/ou
d) d'un quatrième groupe comprenant des machines de post-traitement, à savoir
o des dispositifs de mesure pour déterminer des paramètres des lentilles optiques et/ou des lentilles optiques brutes (101, 102) ;
o des dispositifs d'enlèvement de film pour enlever des films protecteurs des lentilles optiques et/ou des lentilles optiques brutes (101, 102) ;
o des dispositifs de déblocage pour séparer les lentilles optiques et/ou les lentilles optiques brutes (101, 102) d'un bloc ;
o des dispositifs de nettoyage pour éliminer des résidus d'usinage des lentilles optiques et/ou des lentilles optiques brutes (101, 102) ; et
o des dispositifs d'emballage pour emballer les lentilles optiques et/ou les lentilles optiques brutes (101, 102) dans un emballage.

3. Machine d'usinage (1) selon l'une quelconque des revendications 1 ou 2, **caractérisée en ce que** la voie de transport (10) s'étend du côté d'entrée (3) de l'unité de construction (2) au côté de sortie opposé (4) de l'unité de construction (2) de telle sorte qu'une deuxième machine d'usinage (1a) réalisée de construction identique en ce qui concerne la voie de transport (10) peut être placée à côté de la machine d'usinage (1) de manière à ce que le côté d'entrée (3a) de la deuxième machine d'usinage (1a) soit adjacent au côté de sortie (4) de la machine d'usinage (1), et la voie de transport (10a) de la deuxième machine d'usinage (1a) prolonge la voie de transport (10) de la machine d'usinage (1).

4. Machine d'usinage (1) selon la revendication 3, **caractérisée en ce que** le côté d'entrée (3) et le côté de sortie (4) sont orientés parallèlement l'un à l'autre et transversalement à la voie de transport (10).

5. Machine d'usinage (1) selon l'une quelconque des revendications précédentes, **caractérisée en ce que** la voie de transport (10) présente une bande transporteuse ou un convoyeur à rouleaux (11).

6. Machine d'usinage (1) selon l'une quelconque des revendications précédentes, **caractérisée en ce que** la voie de transport (10) est formée linéairement.

7. Machine d'usinage (1) selon l'une quelconque des revendications précédentes, **caractérisée en ce que** celle-ci présente un appareil de lecture (70) pour lire des informations de récipients (100) et/ou de lentilles optiques et/ou de lentilles optiques brutes (101, 102) sur la voie de transport (10), et le dispositif de transport de récipients (30) est commandé par une logique d'extraction qui décide si un récipient (100) est extrait de la voie de transport (10) ou si le récipient (100) est transporté sans extraction vers le côté de sortie (4).

8. Machine d'usinage (1) selon l'une quelconque des revendications précédentes, **caractérisée en ce que** l'unité de construction (2) présente un boîtier (5) présentant une première paroi de boîtier (6) rectiligne du côté d'entrée (3), et une deuxième paroi de boîtier (7) parallèle à la première paroi de boîtier (6) du côté de sortie (4).

9. Machine d'usinage (1) selon la revendication 8, **caractérisée en ce que** la voie de transport (10) ne s'étend pas au-delà de la première et de la deuxième paroi de boîtier (6, 7).

10. Machine d'usinage (1) selon l'une quelconque des revendications 8 ou 9, **caractérisée en ce que** le dispositif de transport de récipients (30) est conçu pour extraire des récipients (100) d'une section (12) de la voie de transport (10), mais pas d'une autre section (13) de la voie de transport (10).

11. Machine d'usinage (1) selon l'une quelconque des revendications précédentes, **caractérisée en ce que** le réservoir tampon de récipients (20) présente des emplacements de stockage (21, 22) agencés les uns aux dessus des autres pour les récipients (100).

12. Machine d'usinage (1) selon la revendication 11, **caractérisée en ce que** les emplacements de stockage (21, 22) sont formés par des emplacements de rayonnage accessibles horizontalement.

13. Machine d'usinage (1) selon l'une quelconque des revendications précédentes, **caractérisée en ce que** les emplacements (41, 42, 43, 44) sont formés sur un plateau tournant (45).

14. **Installation de fabrication** (200) avec une première et une deuxième machine d'usinage (1, 1a) selon l'une quelconque des revendications précédentes, la deuxième machine d'usinage (1a) étant installée à côté de la première machine d'usinage (1) de telle sorte que le côté d'entrée (3a) de la deuxième machine d'usinage (1a) soit adjacent au côté de sortie (4) de la première machine d'usinage (1), et la voie de transport (10a) de la deuxième machine d'usinage (1a) prolongeant la voie de transport (10) de la première machine d'usinage (1).

15. Installation de fabrication (200) selon la revendication 14, **caractérisée en ce que** les machines d'usinage (1, 1a, 1b, 1c) sont formées de construction identique en ce qui concerne le réservoir tampon de récipients (20) et le dispositif de transport de récipients (30).
